**Europäisches Patentamt**

(19) **European Patent Office**

**Office européen des brevets**

(11) Veröffentlichungsnummer: **0 045 896**
**B1**

(12) **EUROPÄISCHE PATENTSCHRIFT**

(45) Veröffentlichungstag der Patentschrift:
26.02.86

(51) Int. Cl.⁴: **B 29 D 23/00**

(21) Anmeldenummer: **81105936.9**

(22) Anmeldetag: **28.07.81**

(54) **Verfahren und Vorrichtung zum Herstellen faserverstärkter Wickel-körper.**

(30) Priorität: **07.08.80 DE 3029890**

(73) Patentinhaber: **URANIT**
**Uran-Isotopentrennings-Gesellschaft mbH,**
**Stetternicher Staatsforst, D-5170 Jülich (DE)**

(43) Veröffentlichungstag der Anmeldung:
**17.02.82 Patentblatt 82/7**

(72) Erfinder: **Die Erfinder haben auf ihre Nennung verzichtet**

(45) Bekanntmachung des Hinweises auf die Patenterteilung:
**26.02.86 Patentblatt 86/9**

(84) Benannte Vertragsstaaten:
**FR GB NL**

(56) Entgegenhaltungen:
**DE - A - 1 937 973**
**DE - A - 2 035 541**
**DE - A - 2 421 619**
**DE - B - 1 629 846**
**US - A - 3 215 576**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren nach dem Oberbegriff des Anspruchs 1 und eine Vorrichtung nach dem Oberbegriff des Anspruchs 2.

Aus der DE—OS 19 37 973 ist ein Verfahren zur Herstellung eines Rohres aus verstärktem Harz bekannt, bei dem eine bestimmte Anzahl von Fäden gleichzeitig und parallel in gleichmäßigen Abständen längs eines rohrförmigen Körpers aufgewickelt werden, bis die aufeinanderfolgenden und so gebildeten Umwicklungen dicht aneinander liegen und die letzte Spirale einer Umwicklung mindestens die erste Spirale der benachbarten Umwicklung erfaßt. Der rohrförmige Körper kann zuerst mit einer Glasfaserbewehrung versehen werden, bei der die Fäden in Längsrichtung parallel zur Körperachse angeordnet sind. Zum Imprägnieren durchlaufen die Fäden einen Trog mit thermogehärtetem Kunstharz. Ein so hergestelltes Rohr könnte im Bedarfsfalle zwar in mehrere, identische Wickelkörper unterteilt werden, wie dies aus der DE—OS 20 35 541 bekannt ist, die Rohrwand ist jedoch in ihrem Querschnitt nicht homogen, insbesondere sind keine Kreuzwicklungen zwischen Umfangswicklungen eingebettet. Dasselbe gilt auch für ein aus der DE—OS 24 21 619 bekanntes Verfahren, bei dem Kreuz- und Umfangs- wicklungen miteinander verzopft werden. Bei allen vorbeschriebenen Verfahren bereitet es außerdem gewisse Schwierigkeiten, die erforderliche Verweilzeit der Fäden im Imprägnierbad auf die Wickelgeschwindigkeit abzustimmen.

Der Erfindung liegt die Aufgabe zugrunde, ein Verfahren der gattungsgemäßen Art so zu gestalten, daß damit rohrförmige Wickelkörper hoher Bruch- und Biegefestigkeit serienmäßig rationell hergestellt werden können.

Mit der erfindungsgemäßen Lösung dieser Aufgabe, wie sie im Patentspruch 1 in bezug auf ein Verfahren und im Patentanspruch 2 in bezug auf eine Vorrichtung dargelegt ist, können je nach Länge des Wickeldorns eine Vielzahl von Wickelkörpern mit Umfangs- und Kreuzwicklungen gleichzeitig hergestellt werden. Die Umfangswicklungen werden dabei für jeden Wickelkörper separat aufgebracht, währen die Kreuzwicklungen für alle Wickelkörper gemeinsamen gewickelt werden. Durch die Verwendung von vorimprägnierten Fasern kann auf das Mitführen einer Imprägnieranlage verzichtet werden. Auch brauch die Wickelgeschwindigkeit nicht an die notwendige Verweilzeit der Fasern im Imprägnierbad angepaßt zu werden, wenn das Imprägnieren und das Wickeln zeitlich und örtlich voneinander unabhängig durchgeführt werden.

Ein Ausführungsbeispiel der Erfindung wird im folgenden anhand der Zeichnungen erläutert:

Die Figuren 1 und 2 zeigen schematisch in der Draufsicht den Aufbau einer Anlage für die Umfangs- bzw. Kreuzwicklung;

die Figuren 3 und 4 zeigen die Zuführung der Fasern für die Umfangs- bzw. Kreuzwicklung;

die Figur 5 zeigt das Ablage-Rollensystem für die Kreuzwicklung;

die Figur 6 a und b zeigen eine Spule mit Bremseinrichtung und federnd aufgehängter Ausgleichsrolle für die Kreuzwicklung;

die Figur 7 zeigt ein Diagramm, bei dem die Bremskraft der Spule gemäß Figur 6 über der Abspulgeschwindigkeit B aufgetragen ist;

die Figur 8 zeigt ein Diagramm, bei dem der Fadenzug F über dem Federhubweghder Laufhubfedergem. Fig. 6 aufgetragen ist.

die Figuren 9 a und b zeigen im Schnitt den Aufbau eines Wickelkörpers.

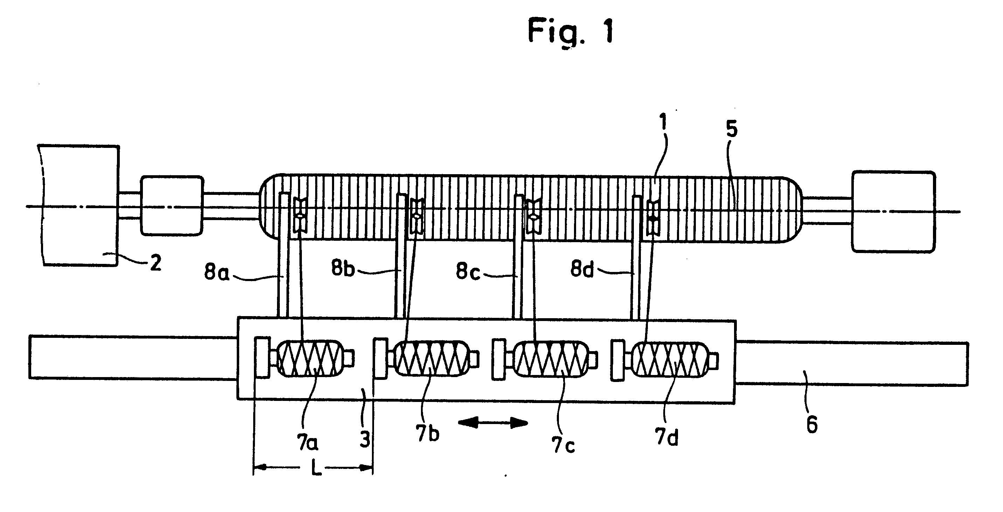

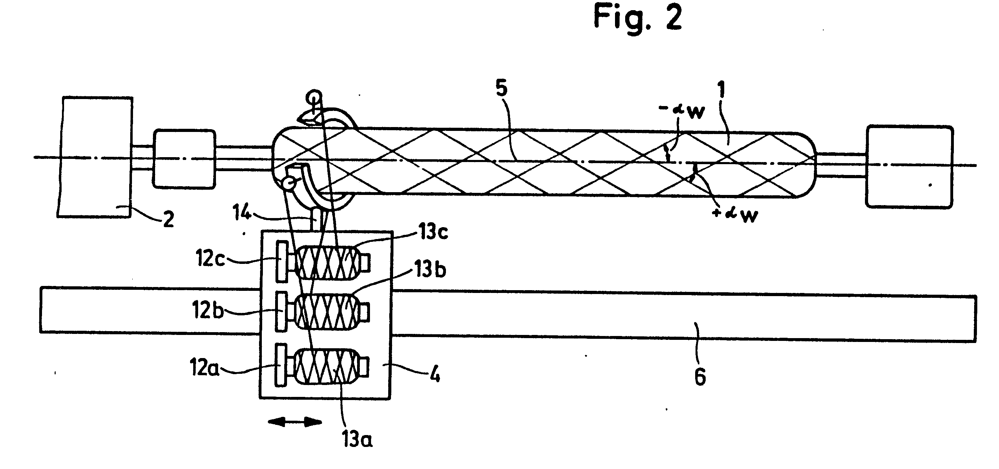

Die Anlage gemäß Figur 1 und 2 besteht im wesentlichen aus einem eingespannten Wickeldorn 1 mit einem Antrieb 2 sowie einem Schlitten 3 für die Umfangswicklungen und einem Schlitten 4 für die Kreuzwicklungen.

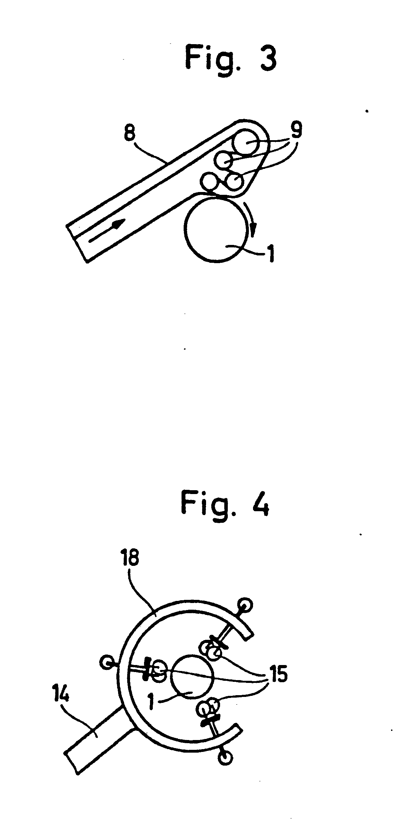

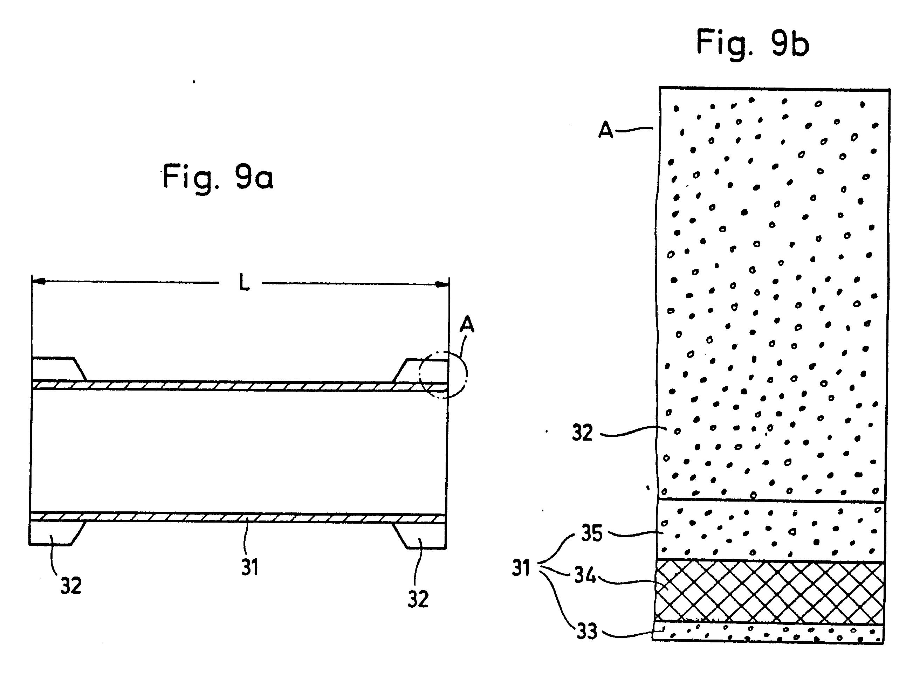

Der Schlitten 3 bewegt sich parallel zur Wickeldornachse 5 auf einem Schlittenbett 6 und trägt mehrere Spulenhalterungen mit Faser-Spulen 7a, 7b, 7c und 7d sowie je ein Faserzuführungssystem 8a, 8b, 8c und 8d. Die Faserzuführungssysteme haben einen gegenseitigen Abstand, der etwa der Länge L der herzustellenden Wickelkörper entspricht (s. Fig. 9a). In der Figur 3 ist eines der Faserzuführungssysteme 8 mit Umlenkrollen 9 in der Seitenansicht dargestellt. Selbstverständlich können über ein derartiges System auch mehrere Faserstränge gleichzeitig geführt werden. Auch ist es möglich, mehrere derartige Umlenkrollensysteme an einer Zuführung über den Umfang des Wickldorns (1) zu verteilen, so daß ein Satz von Fasersträngen gleichzeitig abgelegt werden kann.

Die Figur 2 zeigt das Schlittenbett 6 mit einem Schlitten 4 für die Kreuzwicklung. Auf dem Schlitten 4 sind drei parallel Spulenhalterungen 12 a, b, c mit Spulen 13 a, b, c sowie ein Faserzuführungssystem 14 montiert. Das System 14 (Figur 4) hat drei über den Umfang des Wickeldorns (1) verteilte Rollensysteme 15, durch die drei Faserstränge gleichzeitig über die Länge des Wickeldorns gewickelt werden.

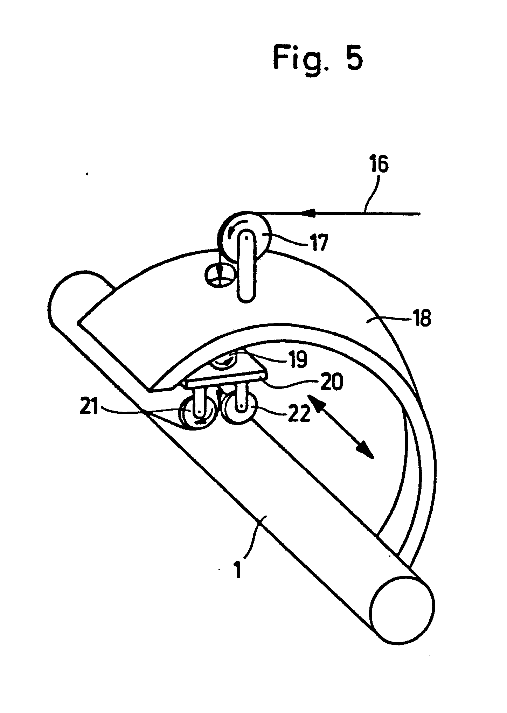

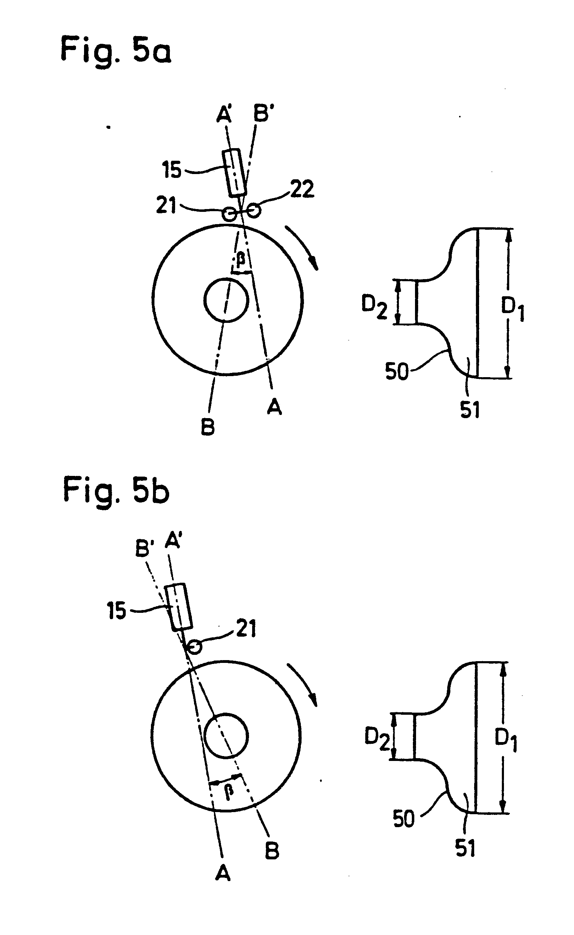

In Figur 5 ist eines der Rollensysteme 15 in perspektivischer Darstellung gezeichnet. Der von einer der Spulen 13 kommende Faserstrang 16, z.B. aus Kohlefäden, wird über eine Rolle 17 umgelenkt, die auf dem Außenumfang des Zufuhrrahmens 18 befestigt ist. Der Rahmen hat eine Bohrung, in der eine zum Wickeldorn 1 weisende Hohlwelle 19 drehbar gelagert ist. Am Ende der Hohlwelle 19 ist ein Quersteg 20 angebracht, der an seinen Enden zwei Ablegerollen 21, 22 trägt. Der Faserstrang 16 ist durch die Hohlwelle 19 hindurchgeführt und wird in der gezeichneten Stellung, bei der sich der Schlitten von links nach rechts bewegt, über die Rolle 21 auf dem Wickeldorn 1 abgelegt. Bei Bewegungsumkehr des Schlittens kann sich die Hohlwelle 19 so verschwenken, daß der Faserstrang über die Rolle 22 abgelegt wird.

Das erfindungsgemäße Rollensystem 15 für die Fadenablage der Kreuzwicklung kann je nach der relativen Stellung des Rollensystems 15 zum Dorn 1 entweder so benutzt werden, daß eine der beiden Rollen 21, 22 die Fadenablage beim Schlittenhinlauf und die andere Rolle die Fadenablage beim Schlittenrücklauf übernimmt, wobei die Übernahme des Fadens von einer Rolle zu anderen jeweils an den Dornenden erfolgt, oder das Ablagesystem wird so benutzt, daß eine der beiden Rollen 21, 22 währen der gesamten Kreuzwicklung die Fadenablage durchführt.

Die relative Lage des Rollensystems 15 zum Dorn 1 für den Fall, daß die Fadenablage abwechselnd über die Rolle 21 oder 22 erfolgt Fall A für den Fall, daß eine der beiden Rollen die komplette Ablage durchführt. Fall B ist in Fig. 5a und 5b dargestellt.

## Fall A

$D_1$ bzw. $D_2$=Größerer bzw. Kleinerer Polkappendurchmesser.

$\beta$=Winkel zwischen der Längsachse A=A' des Rollensystems 15 und der Verbindungslinie B—B', die durch den Dornmittelpunkt und den Mittelpunkt der beiden Rollen 21 und 22 geht.

Einstellbedingung für Fall A:

$$\beta > \text{arc sin}\frac{D2}{D1}$$

$\beta$ gemessen in Richtung der Dorn drehung ist positiv

51 Polkappe, 15 Ablagesystem, 21, 22 Ablagerollen.

## Fall B

$D_1$ bzw. $D_2$=Größerer und kleinerer Polkappendurchmesser

$\beta$=Winkel zwischen Längsachse A—A' des Ablagesystems 15 und der Verbindungslinie B—B', die durch den Dornmittelpunkt und den Mittelpunkt der beiden Rollen 21 und 22 geht.

Einstellbedingung für Fall B: $\beta$ gemessen in Richtung der Dorndrehung ist negativ.

51 Polkappe, 15 Ablagesystem, 21 Ablagerollen.

Die Übernahme des Fadens von einer der Rollen 21, 22 durch die jeweils andere Rolle am Dornende erfolgt im Falle A auf folgende Weise:

Nachdem der Kreuzwickelschlitten 4 und das daran montierte Rollensystem den zylindrischen Teil des Dornes 1 passiert haben, wird nach einem weiteren Wegstück der Punkt erreicht, bei dem der Auflagepunkt des C-Fadens am Ende des zylindrischen Dornteils liegt. Danach wird der Schlitten 4 innerhalb einer vorgegebenen Wegstrecke auf Stilstand angebremst und nach einer vorgegebenen Stillstandszeit wieder auf die konstante Geschwindigkeit, die er im zylindrischen Dornteil besitzt, beschleunigt. Während der gesamten Wendephase des Schlittens 4 dreht der Dorn 1 mit konstanter Geschwindigkeit.

Während der Abbremsphase und der Stillstandsphase des Schlittens 4 wandert der Auflagepunkt des C-Fadens auf dem Dornumfang in Drehrichtung des Dorns und wird auf dem gewölbten Teil 50 der Polkappe 51 abgelegt. Durch das Wandern des Fadenauflagepunktes werden durch eine seitliche Kraftwirkung des C-Fadens auf die Rollen 21, 22 diese zuerst so geschwenkt, daß der Winkel etwas größer als der Normalwinkel $+\alpha_w$ wird; danach wandert der Fadenablagepunkt, so daß sich der Winkel wieder verkleinert und während der Beschleunigungsphase des Schlittens nahezu 0 wird. Kurz darauf hat sich das Rollensystem soweit in Richtung Dorn 1 bewegt, daß die Fadenrichtung praktisch mit der Richtung der Längsachse des Rollensystems 15 übereinstimmt.

Dies ist der Moment, in dem der Faden frei läuft, d.h. mit keiner der beiden Ablagerollen 21, 22 Berührung hat. Im nächsten Moment übernimmt die andere Rolle 22 den Faden und legt ihn auf die Polkappe und danach im zylindrischen Teil unter dem Winkel $-\alpha_w$ ab. Die Übernahme ist dadurch gewährleistet, daß die durch die Rollenmittelpunkte gehende Achse durch die vorhergehende Fadenbewegung kurzzeitig nahezu parallel zu Dornachse geschwenkt wurde. Nach Figur 5b wird die Rolle 23 während des Wendevorganges von $+\alpha_w$ ständig in eine Richtung geschwenkt bis sie den neuen Winkel $-\alpha_{we}$ erreicht hat.

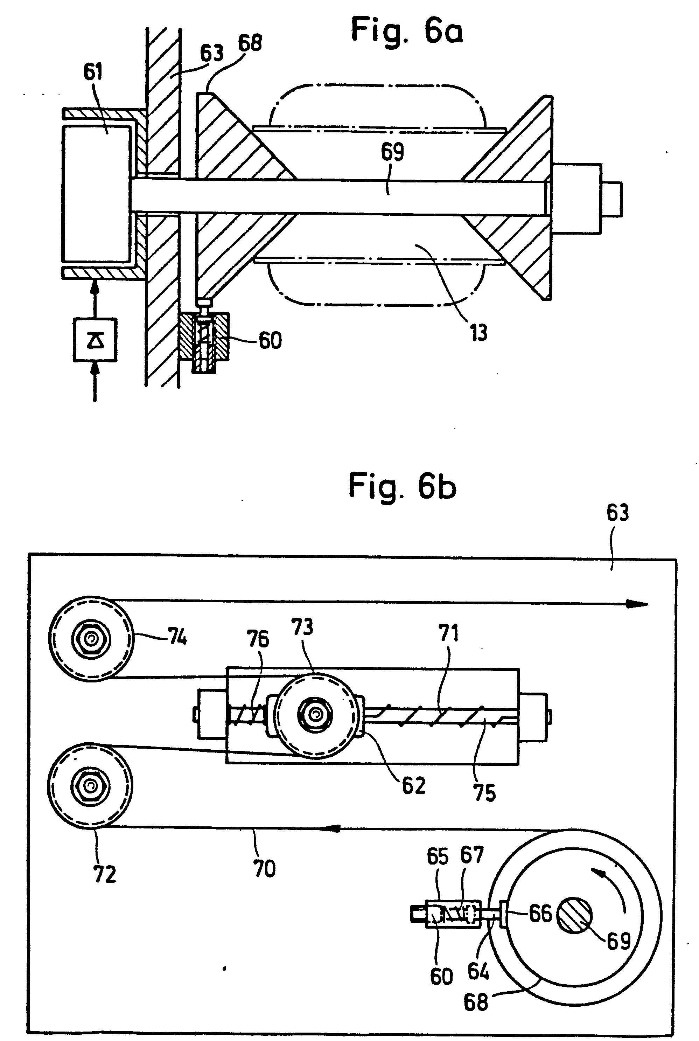

Die Fig. 6a und b zeigt den prinzipiellen Aufbau einer Spule 13 für die Kreuzwicklung in Kombination mit einer mechanischen Reibbremse 60, einer Wirbelstrombremse 61 und einer Ausgleichsvorrichtung 62 für den Faserstrang 70. Die Reibbremse 60 ist an einer Schlittenkonsole 63 befestigt und besteht im wesentlichen aus einem Bremskörper 64, der in einer Hülse 65 axial geführt ist und mit seinem freien Ende 66 über eine einstellbare Feder 67 gegen eine umlaufende Rille 68 im Spulenkörper gedrückt wird. Die Wirbelstrombremse 61 ist direkt auf die Verlängerung der Spulenwelle 69 montiert. Ebenfalls an der Schlittekonsole 63 ist die Ausgleichvorrichtung 62 befestigt, bestehend aus einer langhubigen Feder 71, an deren freiem Ende eine Rolle 73 angebracht ist, sowie zwei Festrollen 72 und 74, über die der Faserstrang gelegt ist, bevor er zur Ablegeführung (Fig. 5) gelangt. Die Feder 71 und die Rolle 72 sind entlang einer Achse 75 in deren Achsrichtung verschieblich geführt. Eine weitere, kurzhubige Feder 76 ist zwischen dem anderen Ende der Achse 75 und der Rolle 73 vorgesehen.

Die Herstellung der erfindungsgemäßen, faserverstärkten Wickelkörper wird wie folgt durchgeführt:

Die Faser, z.B. ein Kohlenstoff-Faden, wird zunächst in bekannter Weise in einer Kunstharz/Härter-Mischung (Duroplast) getränkt, der ein Beschleuniger zugemischt werden kann. Diese Mischung soll folgende Eigenschaften haben:

Verarbeitungstemperatur >50°C, Gebrauchsdauer bei Verarbeitungstemperatur 2h—8h, Gebrauchsdauer bei Raumtemperatur>2 Tage. Bei der Imprägnierung wird eine Harzebeladung eingestellt, die um 10% bis 30% oberhalb des im Wickellaminat angestrebten Harzgehaltes liegt. Die Aufspulung der so getränkten Faser erfolgt auf eine zunächst unbeheizte Spule bei einer Faserspunnung von $\leq 10$ N. Dabei soll der Fortschrittsgrad mehr als 10 Faserbreiten betragen und das Verhältnis von bewickelter Spulenlänge zu Fortschrittsgrad in einem bestimmten Verhältnis steht. Durch diese Maßnahme wirderreicht, daß keine Verhakung oder Beschädigung aufgrund von Wechselwirkungen der Faser zu befürchten ist und auch kein unzulässig starkes Auspressen des Harzes aus den unteren Lagen der Spule auftritt.

Die als Zwischenspeicher dienenden Spulen mit der imprägnierten Faser werden bis zur weiteren Verwendung unter ständiger Rotation gehalten. Vor ihrem Einsatz auf der Wickelanlage werden die Spulen durch Außenbeheizung auf eine Temperatur gebracht, die 10°C bis 20°C unter der Verarbeitungstemperatur liegt. Beim Wickeln selbst wird die Spulenbeheizung fortgesetzt.

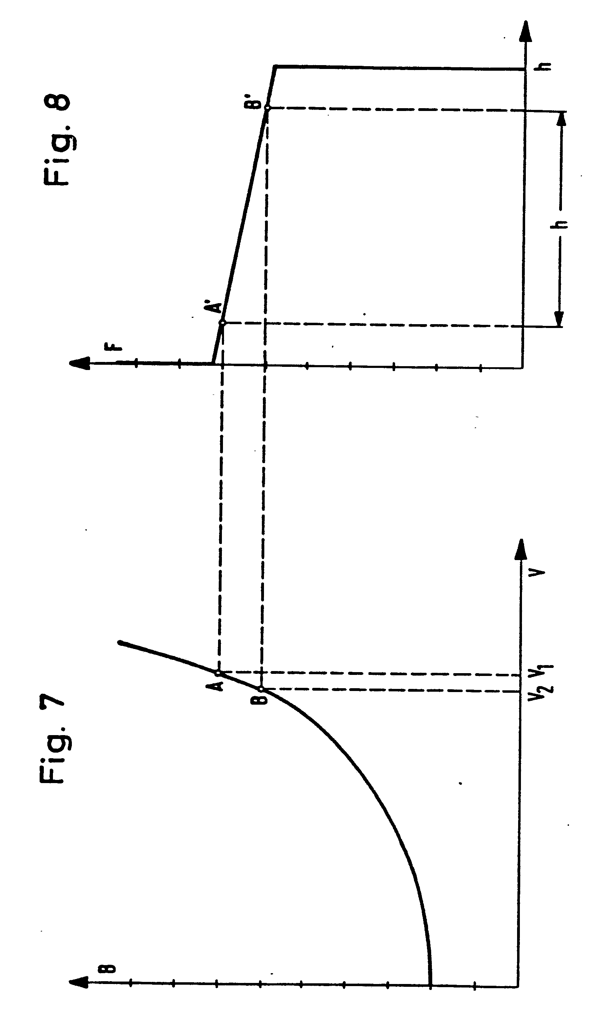

Für die Umfangswicklungen werden eine der Anzahl der gleichzeitig herzustellenden Wickelkörper entsprechende Zahl von Spulen 7 auf dem Schlitten 3 eingelegt und die Fasern bzw. Faserstränge über die Zuführungen 8 am Wickeldorn langelegt und zu je einer Schicht gewickelt, wobei der Schlittenhub etwas größer eingestellt wird als die Länge der herzustellenden Wickelkörper. Nach Fertigstellen einer Schicht mit Umfangswicklungen wird mit dem Schlitten 4, der um die gesamte Länge des Wickeldorns 1 mit im Vergleich zum Schlitten 3 hoher Geschwindigkeit verfahrbar ist, eine Schicht mit Kreuzwicklungen aufgebracht. Bei der Kreuzwicklung ist die Fadenabzugsgeschwindigkeit entlang dem zylindrischen Teil des Wickeldorns 1 konstant, sie sinkt jedoch an den Endkuppen des Dorns beim Wendevorgang auf Null ab und wird sogar negativ, um sodann wieder zuzunehmen. Mit der Spulenbremseinrichtung in Kombination mit der Ausgleichsvorrichtung gemäß Fig. 6 a, b wird auch beim Wendevorgang an den Endkuppen des Dorns eine annähernd gleichbleibende Spannung der Fasern und eine gleichförmige Abspulgeschwindigkeit von der Spule 13 erreicht. Dies wird durch die Diagramme der Figuren 7 und 8 verdeutlicht. Entlang dem zylindrischen Teil des Wickeldorns ergibt sich aufgrund der Wickeldorndrehzahl und der Schlittengeschwindigkeit eine Faserabzugsgeschwindigkeit von der Spule $V_1$, die eine Bremskraft A bzw. eine Faserzugspannung A' erzeugt. An den Wendepunkten geht die Faserzug pannung plötzlich zurück, was aufgrund der Charakteristik der Wirbelstrombremse auch ein Nachlassen der Bremskraft zur Folge hat, bis der Arbeitspunkt B bzw. B' erreicht ist. In diesem Punkt hat sich die Faserabzugsgeschwindigkeit geringfügig auf den Wert $V_2$ abgesenkt; gleichzeitig konnte jedoch die Ausgleichsfeder 71 einen relativ großen Hubweg h zurücklegen und dabei die doppelte Faserlänge 2 h speichern. Im weiteren Verlauf tritt wieder eine Beschleunigung der Wickelgeschwindigkeit auf, wodurch die gespeicherte Faserlänge an den Wickeldorn abgegeben und wieder der Arbeitspunkt A bzw. A' erreicht wird. Durch entsprechende Einstellung der Reib- und Wirbelstrombremse sowie geeignete Bemessung und Charakteristik der Ausgleichsfeder können die Unterschiede in der Faserabzugsgeschwindigkeit von der Spule und in der Faserspannung in relativ engen Grenzen gehalten werden.

Wenn im vorstehenden von Fasern gesprochen wird, so sind hierunter nicht nur einzelne Fäden zu verstehen, sondern auch Faserstränge, die aus einer Vielzahl von Fäden bestehen können. In jedem Falle geliegt es mit Hilfe der Erfindung, für die Herstellung von faserverstärkten Wickelkörpern in Form von rohrförmigen Abschnitten mit Kreuz- und Umfangswicklungen die Produktionsrate um ein vielfaches gegenüber dem bisher bekannten Stande der Technik zu erhöhen.

Im folgenden wird ein Ausführungsbeispiel für die gleichzeitige Herstellung von sechs Wickelkörpern beschrieben:

Es sollen sechs rotations symmetrische, identische Wickelkörper mit einer Länge von je 400 mm—600 mm und einem Durchmesser von 150 mm gleichzeitig auf einem Wickeldorn hergestellt werden, wobei jeder Wickelkörper aus einer zylindrischen Hülle 31 besteht, die an beiden Enden eine Verstärkung 32 von 25 mm Breite besitzt (vgl. Fig. 9 a, b).

Der Wickelkörper soll folgenden Lagenaufbau haben:

Hülle:
    zwei Lagen Umfangswicklung 33,
        Wandstärke 100 µm,
    zwei Lagen Kreuzwicklung 34,
        Wickelwinkel: ±30° (zur Rohrlängsachse)
        Wandstärke: 300 µm
    sechs Lagen Umfangswicklung 35,
        Wandstärke 300 µm.

Verstärkung:
    20 Lagen Umfangswicklung 32, Wandstärke: 2.000 µm.

Ausführung:
1. Umfangswicklung
Der Schlitten für die Umfangswicklung wird in Arbeitseinstellung gefahren. Er trägt ein Gestell mit 7 Zuführungen, an deren zum Dorn weisenden Ende jeweils ein Rollensystem für die Fadenablage (vgl. Fig. 3) angebracht ist.

Hinter jeder Fadenzuführung befindet sich auf dem Schlitten eine Halterung, die die Spule mit dem bereits getränkten C-Fasermaterial aufnimmt. Die Halterung ist mit einer Magnet- bzw. Wirbelstrombremse verbunden; zusätzlich ist eine Reibbremse in seitlichem Eingriff mit der Wirbelstrombremse vorgesehen.

Sämtlich Zuführungen haben den exakt gleichen Abstand, der etwas größer gehalten wird als die Wickelkörperlänge, um dem Verlust beim Auftrennen der Rohre Rechnung zu tragen.

Jède Zuführung trägt zusätzlich zum Ablagesystem eine Andrückrolle, mit der der bereits abgelegte C-Fäden auf dem Wickeldorn breiter gedrückt werden. Nachdem die C-Fäden von 6 der 7 Zuführungen am Dorn befestigt sind und mit der Umfangswicklung gestartet wurde, werden nach ca. 5 Dornumdrehungen sämtliche Andrückrollen gleichzeitig auf hydraulischem Wege mit dem Dorn in Eingriff gebracht.

Es wird mit einer Fadenspannung von 20 N bis 25 N gewickelt; die Fadenabzugsgeschwindigkeit liegt zwischen 2 m/sec bis 4 m/sec. Um eine geschlossene Umfangslage zu erreichen, muß der Faden durch die Andrückrolle auf ca. 3,3 mm gespreizt werden. Während des gesamten Wickelvorgangs befindet sich der Dorn auf einer Temperatur von 60°C±5°C (Innenbeheizung).

Nach Durchführung der Umfangswicklung (der Schlitten bewegt sich hierbei um eine Wickelkörperlänge hin- und zurück) werden die Andrückrollen wieder auf hydraulischem Wege außer Eingriff gebracht, die C-Fäden abgetrennt und das Gestell mit den 7 Zuführungen um ca. 25 cm senkrecht zur Dornachse zurückgefahren. Anschließend wird der Schlitten hinter den Reitstock verfahren, so daß während der daran anschließenden Kreuzwicklung Rüstungsarbeiten am Schlitten durchgeführt werden können.

2. Durchführung der Kreuzwicklung

Der Kreuzwickelschlitten wird in Arbeitsstellung gebracht. Am Schlitten ist ein Arm befestigt, an dessen zum Wickeldorn weisenden Ende drei bis fünf Ablegesysteme in einer zur Dornachse senkrechten Ebene und symmetrisch über den Wickeldornumfang verteilt angebracht sind.

Auf dem Schlitten befinden sich eine entsprechende Zahl von Konsolen, auf die Spulenhalterungen auf der dem Wickeldorn zugewandten Seite montiert sind. Wie bei der Umfangswicklung sind die Spulenhalterungen mit einer Reib- und einer Wirbelstrombremse verbunden. Zusätzlich sind hinter jeder Spule auf der dem Wickeldorn abgewandten Seite der Konsole 2 feststehende Rollen und dazwischen eine in horizontaler Richtung bewegliche Rolle angebracht, über die der C-Faden geführt wird bevor er auf das Ablegerollensystem gelangt. Die dem Wickeldorn zugewandte Seite der Rolle ist it einer Feder fest verbunden, so daß die Rolle im entlasteten Zustand in diese Richtung gezogen wird.

Am anderen Ende der Rollenführung ist eine weitere Feder angebracht, die mit der Rolle nur dann im Eingriff ist, wenn die Fadenspannung einen bestimmten Wert übersteigt und die Rolle bis zu diesem Ende der Rollenführung ausgelenkt wird. Die Funktion dieser Vorrichtung ist es, den beim Wendevorgang an den Wickeldornenden auftretende Fadenüberschuß zu speichern und nach Durchführung der Wande wieder abzugeben. Die von der Spule über die Fadenausgleichsvorrichtung auf das Ablegerollensystem geführten 3—5 imprägnierten C-Fäden werden an genau markierten Stellen am Dornende befestigt und die Kreuzwicklung mit einer Schlittengeschwindigkeit von 0,75 m/sec bis 2 m/sec. begonnen. Die Fadenspannung liegt bei 15 N±3 N im zylindrischen Dornteil. Um die angegebene Wandstärke von 300 µm zu erreichen, muß der Schlitten ca. 450 Hin- und Rückläufe durchführen.

Bei der Fadenablage im zylindrischen Dornteil wird die Spannung im C-Faden durch die kombinierte Bremswirkung der Reibbremse und der Wirbelstrombremse erzeugt. Während die Reibbremse eine konstante Bremskraft von 5 N erzeugt, verändert sich die Bremskraft der Wirbelstrombremse proportional zur Fadenabzugsgeschwindigkeit und ist so eingestellt, daß bei der vorgegebenen Schlittengeschwindigkeit 10 N erreicht werden, so daß insgesamt 15 N auf den C-Faden wirken.

Beim Wendevorgang an den Wickelornenden sinkt die Fadenabzugsgeschwindigkeit im Umkehrpunkt des Kreuzwickelschlittens auf Null ab und nimmt beim Wiederanfahren des Supports . in umgekehrter Richtung negative Werte an, d.h. es tritt eine Fadenverlängerung von ca. 200 mm auf. Im Wendepunkt wirkt nur noch die Reibkraft von 5 N; die bewegliche Rolle befindet sich während der gesamten Fadenablage auf dem zylindrischen Teil und am Wendepunkt des Schlittens am dornseitigen Anschlag der Rollenführung. Damit im Wendepunkt die Rolle nicht zurückgezogen wird, d.h. keine weitere Abspulung des Fadens erfolgt, muß die Federstärke der an der Rolle befestigten Feder bei Maximalauslängung der Feder, $d_{max}$, kleiner als die Reibkraft sein, d.h.

$$f \cdot d_{max} < 5 \text{ N}$$

andererseits muß die Maximalauslenkung $d_{max}$ der Feder größer sein als die durch die Fadenverlängerung bewirkte Zurückholung der Rolle, d.h.

$$d_{max} > 100 \text{ mm.}$$

Dies wird z.B. mit einer Feder erreicht, deren Nullage 200 mm vom wickeldornseitigen Anschlag entfernt liegt und die eine Federstärke von $f = 20$ N/m aufweist.

Bewegt sich der Schlitten wieder in den zylindrischen Dornteil hinein, steigt die Fadenabzugsgeschwindigkeit stetig bis zum Endwert; gleichzeitig steigt die Fadenspannung auf 15 N an und die bewegliche Rolle wird wieder zum wickeldornseitigen Anschlag hingezogen. Dort kommt sie in Eingriff mit der zweiten Feder 76, die eine Federkraft von 500 N/m aufweist, so daß nach einer Stauchung der Feder um 1,5 cm eine Gegenkraft von 15 N aufgebaut wird.

Um Änderungen in der Fadenabzugsgeschwindigkeit (und damit der Fadenspannung), hervorgerufen durch die Hin- und Herbewegung, die der Faden beim Abspulen ausführt, zu vermeiden, wird der Abstand zwischen der feststehenden Rolle der Konsole, über die der Faden zuerst läuft, und der Spule auf etwa 1 m gebracht. Dadurch werden die Schwankungen in der Umdrehungsgeschwindigkeit der Spule (über die die Bremskraft der Wirbelstrombremse gesteuert wird) in ausreichendem Umfang abgesenkt.

Nach Durchführung der Kreuzwicklung wird der Schlitten aus dem Arbeitsbereich herausgefahren und der Schlitten für die Umfangswicklung wieder in Arbeitsstellung gebracht. Die Herstellung der zweiten Umfangswicklung erfolgt in der gleichen Weise wie unter Punkt 1 beschrieben.

3. Durchführung der Verstärkerwicklung 32

Nach der Herstellung der zweiten Umfangswirklung bleibt der Schlitten in Position, Zusätzlich zu den bereits auf dem Dorn befindlichen sechs C-Fäden wird ein siebter C-Faden befestigt und sämtliche 7 Verstärkungen gleichzeitig gewickelt. Im Gegensatz zur Umfangswicklung der Hülle wird ohne Andrückrolle und mit einem Fortschrittsgrad von 1,6 mm (Hülle: 3,2 mm) gearbeitet. Nach Aufbringen eines Absauggewebes und einer Kevlarhilfswicklung wird der Dorn auf Härtetemperatur (120°C, 2 h und 160°C, 7 h) gebracht. Danach wird die Kevlarwicklung und das Tuch entfernt und das gesamte Rohr in die entsprechenden Wickelkörper aufgetrennt.

4. Herstellung der vorimprägnierten C-Fäden

Bei den bekannten Wickelverfahren sind der Ausnutzung höherer Wickelgeschwindigkeiten dadurch Grenzen gesetzt, daß die Imprägnierung des C-Fadens ein aufwendiges Rollensystem erfordert und bei relativ geringen Fadengeschwindigkeiten ablaufen muß. Durch Benutzung bereits imprägnierter C-Fasern kann der relativ langsam ablaufende Imprägniervorgang vom eigentlichen Wickeln zeitlich entkoppelt werden und somit die von der Maschinenseite her möglichen, höheren Wickelgeschwindigkeiten ausgenutzt werden. Durch die nachfolgend beschriebenen Maßnahmen wird erreicht, daß C-Fasern, die nach einem herkömmlichen Verfahren imprägniert wurden, eine ausreichende Imprägnierung und Verarbeitbarkeit über einen Zeitraum von mehreren Tagen beibehalten.

a) Harzsystem

Es wird ein Harzsystem verwendet, dessen Verarbeitungstemperatur oberhalb 50°C und dessen Gebrauchsdauer bei Verarbeitungstemperatur größer 5 h beträgt. Die Härtetemperatur sollte oberhalb 100°C liegen.

Als geeignet erwiesen hat sich das System:

| | |
|---|---|
| Harz: | Diglycidäther (auf Bisphenol A Basis) |
| Härter: | Methylnadicsäureanhydrid |
| Beschleuniger: | Benzyldimethylamin |
| Mischungsverhältnis: | 100/90/1. |

b) Aufspulung der imprägnierten Fäden

Die Harzbeladung der imprägnierten Fäden wird so eingestellt, daß der Harzanteil zwischen 50 Vol-% bis 60 Vol-% liegt. Der imprägnierte Faden wird auf eine zylindrische Spule (Durchmesser 600 mm—100 mm) unter einem Winkel zwischen 75°—80° (zur Spulenachse) gewickelt, wobei die Fadenspannung kleiner 5 N beträgt.

Durch ensprechende Wahl des Fahrweges, den der Schlitten ausführt, und der in Abhängigkeit vom Wickelwinkel und vom Abstand Ablegerolle—Dornoberfläche festzulegen ist, kann erreicht werden, daß die Fäden nach einer bestimmten Zahl von Umläufen exakt auf die vorher abgelegten Fäden gelegt werden, d.h. ein Wiederholungsmuster erzeugt wird, das zu einer offenen Netzstruktur führt. Der Abstand neheneinanderliegender Fäden wird dann durch das Wiederholungsmuster und den Wickelwinkel bestimmt. Wird z.B. auf eine Spule mit Durchmesser D=100 mm unter einem Winkel von 80° gewickelt, ergibt sich bei einer Fadenbreite F=1,5 mm und einem Wiederholungsmuster 7 ein Fadenabstand von:

$$A = \frac{T_2 \cdot D}{7} \cos \lambda - F = 10,115 \text{ mm.}$$

Ein Wiederholungsmuster von 7 wird dadurch eingestellt, daß zwischen der Wickellänge $L_w$ (Schlittenweg) und dem Fortschrittsgrad P (Abstand zweier aufeinanderfolgender Fäden, gemessen in Richtung der Spulenlängsachse) die Beziehung besteht:

$$L_w P \cdot \frac{M}{2 \cdot N}.$$

M=1, 2, 3...
N=Frequenz des Wiederholungsmusters.

Um das Wiederholungsmuster beibehalten zu können, muß der Tatsache Rechnung getragen werden, daß mit wachsender Lagenzahl der Durchmesser der Spule sich vergrößert, was zu einer Verschiebung des Musters führt. Dem kann dadurch Rechnung getragen werden, daß der Abstand Ablegerolle—Spulenoberfläche proportional zur gewickelten Lagenzahl, z.B. durch einen Stellmotor, kontinuierlich vergrößert wird.

Wird die Ablegerolle in Richtung einer Achse zurückgestellt, die durch den Spulenmittelpunkt geht, beträgt der Rückstellweg $\Delta_x$ der Ablegerolle, gemessen von der Ausgangsstellung, $A_o$ bei Wickelbeginn, nach $N_L$ gewickelten Wiederholungsmustern

$$\Delta_x = d_L \cdot (1 + \frac{2 \cdot A_o}{D_o}) \cdot n_L$$

wobei $d_L$=Wandstärke eines Wickelmusters (empirisch zu bestimmen $D_o$=Spulendurchmesser.

Die exakte Einhaltung des Wiederholungsmusters wird beibehalten bis ca. 1/4 bis 1/2 der gesamten Fasermenge aufgewickelt sind. Dann wird die Fadenarmbewegung gestoppt, wodurch mit weiter wachsendem Spulendurchmesser eine Verschiebung des Wickelmusters in der Weise erfolgt, daß die ursprünglich gebildeten rautenförmigen und mit Harz gefüllten Hohlräume durch die darüber abgelegten Lagen geschlossen werden, so daß in den unteren Lagen eine ausreichende Menge Harz eingeschlossen wird.

Die Harzkonservierung in den unteren Lagen wird weiterhin dadurch begünstigt, daß die Spulen auf ca. 50° beheizt werden. Durch den nach dem Aufspulen und beim Abkühlen der Spule (Material: Aluminium) auftretenden Wärmeschrumpf werden die Fasern der unteren Lagen zusätzlich entlastet.

c) Zwischenlagerung der Spulen

Die Spulen werden in rotierende Aufnahmen eingesetzt (5—10 U/min), so daß die Gleichmäßigkeit der Harzverteilung bis zur Weiterverarbeitung sichergestellt ist. Bei erhöhten Forderungen hinsichtlich Luft- und Feuchtigkeitsaufnahme des Harzes kann die rotierende Aufbewahrung auch im Vakuum (~1 Torr) erfolgen.

**Patentansprüche**

1. Verfahren zum gleichzeitigen Herstellen mehrerer identischer faserverstärkter rotationssymmetrischer Wickelkörper vorbestimmter Länge, insbesondere von Rotoren für Zentrifugen, bei dem mit härtbarem Kunststoff getränkte Faserstränge auf einen Wickeldorn gewickelt werden und nach dem Aushärten des Kunststoffes der Wickeldorn entfernt wird, wobei für das Wickeln von Schichten mit Umfangswicklungen eine der Anzahl der Wickelkörper entsprechende Zahl von Fasersträngen oder Faserstrangsätzen entlang dem Wickeldorn angelegt und zu je einer Schicht gewickelt werden und wobei der gegenseitige Abstand der angelegten Faserstränge oder Faserstrangsätze etwa der Länge des einzelnen Wickelkörpers entspricht oder etwas größer gehalten .wird, gekennzeichnet durch folgende Merkmale:

a) auf dem Wickeldorn werden abwechselnd Schichten mit Umfangswicklungen und Schichten mit Kreuzwicklungen übereinander angebracht,

b) für das Wickeln der Schichten mit Kreuzwicklungen wird ein Faserstrang oder Faserstrangsatz am Wickeldorn angelegt und über die Gesamtlänge der nebeneinanderliegenden Schichten mit Umfangswicklungen entlang dem Wickeldorn gewickelt, worauf

c) der so entstandene Zylinder in einzelne die Wickelkörper bildende Abschnitte unterteilt wird, die von dem Wickeldorn abgezogen werden;

d) die aus einzelnen Fasern gebildeten Faserstränge werden unmittelbar nach dem Tränken mit härtbarem Kunststoff auf als Zwischenspeicher dienende Spulen aufgespult, die bis zum Wickeln in ständiger Rotation gehalten und vor bzw. während ihrem Einsatz beheizt werden;

e) beim Tränken der Faserstränge wird eine Kunstharzbeladung eingestellt, die um 10% bis 30% über dem im Wickellaminat vorgesehenen Kunstharzgehalt liegt, worauf die getränkten Stränge so aufgespult werden, daß zwischen ihnen ein gegenseitiger Abstand verbleibt, der den Kunstharzüberschuß bis zur Weiterverarbeitung aufnimmt.

2. Vorrichtung zur Durchführung des Verfahrens nach Anspruch 1, bestehend aus einem mit einem Antrieb versehenen Wickeldorn und zwei getrennten, parallel zur Längsachse des Wickeldorns verfahrbaren Schlitten, gekennzeichnet durch folgende Merkmale: .

a) der eine Schlitten (3) für die Umfangswicklung ist mit einer der Anzahl der gleichzeitig herzustellenden Wickelkörper entsprechenden Zahl von nebeneinander angeordneten Faserstrangzuführungseinrichtungen (8) ausgestattet und etwa um die Länge der einzelnen Wickelkörper verfahrbar;

b) der andere Schlitten (4) ist mit nur einer Faserstrangzuführungseinrichtung, die eine oder mehrere symmetrisch über den Wickeldornumfang verteilte Rollensysteme für die gleichzeitige Ablage einer entsprechenden Zahl von Fasersträngen trägt, ausgestattet und um die gesamte Länge des Wickeldorns (1) verfahrbar;

c) der Rahmen (18) der Faserzuführungseinrichtung für die Kreuzwicklungenträgt an seinem zum Wickeldorn (1) weisenden Ende eine auf der Außenseite montiert Umlenkrolle (17) und weist eine Bohrung auf, in der eine Hohlwelle (19) drehbar gelagert ist;

d) am freien Ende der Hohlwelle (19) sind zwei Ablegerollen (21, 22) befestigt, die abwechselnd den über die Umlenkrolle (17) und durch die Hohlwelle (19) geführten Faserstrang (16) aufnehmen und auf dem Wickeldorn (1) ablegen.

3. Vorrichtung nach Anspruch 2, dadurch gekennzeichnet, daß die Spulenhalterungen (12) auf dem Schlitten (4) für die Kreuzwicklung mit je einer geschwindigkeitsunabhängigen und einer geschwindigkeitsabhängigen Bremseinrichtung (60, 61) ausgestattet sind, und daß der Schlitten (4) eine Ausgleichsvorrichtung (62) für die Faserstrangzufuhr trägt, bestehend aus einer langhubigen, an einer Schlittenkonsole (63) aufgehängten Feder (71) und mehreren Umlenkrollen (72, 73, 74), von denen die eine Rolle (73) mit der Feder (71) verbunden ist und in horizontaler Richtung sich auf einer Achse (75) bewegt und einer kurzhubigen Feder (76), die am anderen Ende der Achse (75) befestigt ist.

**Revendications**

1. Procédé pour réaliser simultanément plusieurs structures bobinées identiques, renforcées par des fibres et présentant une symétrie de révolution, ayant une longueur prédéterminée, notamment des rotors de centrifugeuses, procédé dans lequel des écheveaux de fibres, imbibés d'une résine durcissable, sont enroulés sur un mandrin de bobinage, et ce mandrin étant enlevé après durcissement de la résine, tandis que, pour le bobinage de couche avec des enroulements périphériques, un nombre d'écheveaux de fibres ou bien de jeux d'écheveaux de fibres, correspondant au nombre des structures bobinées, est appliqué le long du mandrin de bobinage, ces écheveaux ou ces jeux étant enroulés pour constituer chacun une couche, l'intervalle réciproque des écheveaux ou des jeux d'écheveaux de fibres ainsi appliqués correspondant à peu près à la longueur des différentes structures bobinées ou bien étant maintenu un peu supérieur à cette longueur, procédé caractérisé en ce que:

a) sur le mandrin de bobinage, on applique alternativement les unes sur les autres, des couches avec des enroulements périphériques et des couches avec des enroulements croisés,

b) pour le bobinage des couches avec des enroulements croisés, un écheveau de fibres ou bien un jeu d'écheveaux de fibres est appliqué sur le mandrin de bobinage et il est enroulé sur la longueur totale des couches contiguës comportant des enroulements périphériques le long du mandrin de bobinage.

c) le cylindre ainsi obtenu est subdivisé en tronçons individuels constituant les structures bobinées, qui sont retirés du mandrin de bobinage,

d) les écheveaux de fibres constitués de fibres individuelles sont bobinés directement après leur imprégnation avec une résine durcissable sur des bobines servant de réserve intermédiaire, et qui, jusqu'au bobinage, sont maintenues en rotation constante et sont chauffées avant ou bien pendant leur mise en oeuvre,

e) lors de l'imbition des écheveaux de fibres, il est mis en jeu une charge de résine synthétique dépassant de 10% à 30% la teneur en résine synthétique prévue dans le stratifié bobiné, après quoi les écheveaux ainsi imbibés sont bobinés de façon qu'entre eux subsiste un intervalle réciproque qui absorbe l'excédent de résine synthétique jusqu'au traitement ultérieur,

2. Dispositif pour la mise en oeuvre du procédé selon la revendication 1, dispositif constitué d'un mandrin de bobinage muni d'un entraînement et de deux chariots distincts susceptibles d'être déplacés parallèlement à l'axe longitudinal du mandrin de bobinage, dispositif caractérisé en ce que:

a) le premier chariot (3) pour le bobinage périphérique est équipé d'un nombre de dispositifs de guidage (8) d'écheveaux de fibres disposés les uns à côté des autres qui correspond au nombre des structures bobinées à réaliser simultanément, et ce chariot est susceptible d'être déplacé environ de la longueur des structures bobinées individuelles,

b) l'autre chariot (4) est équipé d'un dispositif de guidage d'écheveau de fibres et qui porte un ou plusieurs systèmes de galets répartis symétriquement sur la périphérie du mandrin de bobinage pour permettre de dépôt simultané d'un nombre correspondant d'écheveaux de fibres, et ce chariot est susceptible d'être déplacé sur la longueur totale du mandrin de bobinage (1),

c) le cadre (18) du dispositif de guidage des fibres pour les enroulements croisés porte, à son extrémité dérivée vers le mandrin de bobinage (1), un galet de renvoi (17) monté sur sa face externe, et comporte un perçage dans lequel un arbre creux (19) est monté en étant susceptible de tourner,

d) à l'extrémité libre de l'arbre creux (19) sont fixés deux galets d'application (21, 22) qui reçoivent alternativement le faisceau de fibres (16) guidé par l'intermédiaire du galet de renvoi (17) et à travers l'arbre creux (19), et le dépose sur le mandrin de bobinage (1),

3. Dispositif selon la revendication 2, caractérisé en ce que les supports de bobines (12) sur le chariot (4) pour le bobinage croisé, sont chacun équipés d'un dispositif de freinage indépendant de la vitesse et un dispositif de freinage dépendant de la vitesse (60, 61), le chariot (4) portant un dispositif de compensation (62) pour l'alimentation en écheveaux de fibres, dispositif constitué d'un ressort à longue course (71) accroché à une console de chariot (63), ainsi que plusieurs galets de renvoi (72, 73, 74), l'un (73) de ces galets étant relié au ressort (71) et se déplaçant en direction horizontale sur un axe (75), le dispositif de compensation comportant également un ressort à faible course (76) fixé à l'autre extrémité de l'axe (75).

**Claims**

1. Method for simultaneously producing several identical fiber reinforced rotationally symmetric wound bodies of predetermined length, especially of rotors for centrifuges, by winding strands of fibers saturated with a hardenable plastic onto a mandrel and removing the mandrel after hardening of the plastic, wherein a plurality of fiber strands or fiber strand sets corresponding to the number of bodies to be wound are attached along the mandrel and wound to one layer each for winding layers with circumferential windings and the spacings of the fiber strands or fiber strand sets attached roughly correspond to the length of the individual wound bodies or are kept slightly longer, comprising:

a) alternately attaching to the mandrel by superposition layers with circumferential windings and layers with cross windings;

b) attaching to the mandrel a fiber strand or fiber strand set for winding the layers with cross windings and winding it over the combined length of the juxtaposed layers with circumferential windings along the mandrel, and subsequently

c) dividing the cylinder so formed into individual sections forming the respective wound bodies which are then removed from the mandrel;

d) winding the fiber strands formed by single fibers directly after saturation with hardenable plastic onto bobbins serving as intermediate storage and maintaining the bobbins in constant rotation until winding and heating them before or during their use;

e) establishing during saturation of the fiber strands a synthetic resin load which lies 10% to 30% above the desired synthetic resin content in the wound laminate and thereafter winding the saturated strands onto bobbins in such a manner that mutual spaces remain between successive turns which absorb the excess synthetic resin until further processing.

2. Arrangement for performing the method as defined in Claim 1 consisting of a mandrel provided with a drive and two separate carriages movable parallel to the longitudinal axis of the mandrel, comprising the following features:

a) one of the carriages (3) for circumferential winding is equipped with juxtaposed fiber strand feed devices (8) corresponding in number to the number of wound bodies to be fabricated simultaneously and which can be displaced over the length of the single wound bodies;

b) the other carriage (4) is equipped with only one fiber strand feed system carrying one or several roller systems symmetrically distributed on the mandrel circumference for the simultaneous deposition of a corresponding number of the fiber strands which can be displaced over the entire length of the mandrel (1);

c) the frame member (18) of the fiber feed system for the cross windings carries at its end pointing to the mandrel (1) a deflection roller (17) mounted on the outer side and is provided with a through bore and a hollow shaft rotatably mounted in that bore;

d) two laying rollers (21, 22) fastened to the free end of the hollow shaft (19) which alternately accept the fiber strand (16) guided over the deflection roller (17) and through the hollow shaft (19), and lay it onto the mandrel (1).

3. Arrangement as defined in Claim 2 wherein the bobbin mounts (12) on the carriage (4) for the cross winding are equipped with one speed independent and one speed dependent braking force (60, 61) each and wherein the carriage (4) has an equalizing means (62) for fiber strand supply consisting of a long stroke spring (71) suspended at a carriage console (63) and several deflection rollers (72, 73, 74), one of the rollers (73) connected with the spring (71) and moving horizontally on an axis (75), and a short stroke spring (76) which is fastened to the opposite end of the axis (75).

Fig. 1

# Fig. 2

# Fig. 3

# Fig. 4

# Fig. 5

## Fig. 5a

## Fig. 5b

# Fig. 6a

# Fig. 6b

Fig. 7

Fig. 8

0 045 896

13

Fig. 9a

Fig. 9b

0 045 896